# EUROPEAN PATENT APPLICATION

(11) **EP 3 089 138 A1**
(43) Date of publication of application: **02.11.2016**
(21) Application number: 16167919.6
(22) Date of filing: 02.05.2016
(51) Int. Cl.: G09B 9/24

(54) **METHODS AND SYSTEMS RELATING TO TRAINING AND CERTIFICATION**

(30) Priority: 30.04.2015 CA 2890505
(71) Applicant: Khan, Faud, Osgoode, ON K0A 2W0 (CA)
(72) Inventor: Khan, Faud, Osgoode, ON K0A 2W0 (CA)
(74) Representative: Hoffmann Eitle

(57) **Abstract**

A system for training to help a student pilot or general aviation pilot learn providing a digital record of training and flight sessions recorded. This system compromises of two components; one of software run on mobile device such as a tablet; and two, an electronic system that contains many sensors to collect flight data in real-time. The system for training student pilots generally includes a method to collect flight data and present it visually to be viewed after the flight. This data can use to provide a detailed analysis to flight techniques with the goal to making a pilot more effective or to archive data as proof of flight hours in support of a flight log. This system can also provide data than be used in other modes of travel including automobiles, transport trucks, or just walking where a digital record is required for the travel taken.

## Description

### CROSS-REFERENCE TO RELATED APPLICATIONS

This patent application claims the benefit of Canadian Patent Application 2,890,505 filed April 30, 2015 entitled "Methods and Systems relating to Training and Certification", the entire contents of which are incorporated herein by reference.

### FIELD OF THE INVENTION

This invention relates to training, qualification, and verification systems and more particularly to a system for aiding initial training and qualification whilst supporting ongoing re-qualification and verification.

### BACKGROUND OF THE INVENTION

Within a number of environments a student is required to learn particular aspects of a skill and / or profession. However, during training exercises the student is too focused to absorb many aspects of the training session or training activity. This is particularly true where the student is in control of a vehicle, vessel, or aircraft. Whilst in many instances an instructor may provide feedback this tends to be anecdotal or summative and cannot be provided in these scenarios where the student graduates to solo activities. Similarly, many skills and professions require periodic re-qualification, verification and on-going training where similar issues exist with respect to providing monitoring of the trainee and / or qualified.

For example, it would be beneficial to provide a system associated with training student pilots that helps the student pilot review, explore and learn from each training session over a subsequent period of time through a digital record of training and flight sessions recorded. Equally, a general aviation pilot may learn / review their activities in order to become a better aviator, for example, through a digital record of their flight sessions recorded. At the same time training schools, certification authorities, etc. would benefit from being able to acquire, analyse, and quantify the activities of individual trainees / qualified personnel to improve training regimens, adjust re-certification procedures, validate data for re-certifying qualified individuals, etc.

Accordingly, it would be beneficial to provide trainees and / or qualified personnel with a two-part system. A first part of the system comprises a software application in execution upon a portable or fixed electronic device that acquires, analyses and presents data to the trainees and / or qualified personnel together with remote storage and facilitating approved third party access / review. The software application acquiring data from a data logging system associated with the trainees and / or qualified personnel which monitors training sessions or activities of the trainees and / or qualified personnel acquiring data in real-time.

Other aspects and features of the present invention will become apparent to those ordinarily skilled in the art upon review of the following description of specific embodiments of the invention in conjunction with the accompanying figures.

### SUMMARY OF THE INVENTION

It is an object of the present invention to mitigate limitations in the prior art relating to training, qualification, and verification systems and more particularly to a system for aiding initial training and qualification whilst supporting ongoing re-qualification and verification.

In accordance with an embodiment of the invention there is provided a system for providing a digital record of an activity relating to a controller of a vehicle, the system comprising:
computer readable instructions stored within a memory of an electronic device associated with the controller, the computer instructions for execution by a microprocessor of the electronic device generating an electronic travel record comprising at least data obtained from an electronic data logging system and user data, and for synchronizing the electronic travel record with a remote database upon a network storage device accessed via a global communications network; and
the electronic data logging system comprising a plurality of sensors to collect travel data in real-time, wherein the plurality of sensors are selected from the group comprising a global positioning system, barometric pressure, accelerometer, gyroscope, temperature, and magnetometer.

In accordance with an embodiment of the invention there is provided a system for training a pilot by providing a digital record of training and flight sessions, the system comprising:
computer readable instructions stored within a memory of an electronic device associated with the pilot, the computer instructions for execution by a microprocessor of the electronic device generating an electronic flight record comprising at least data obtained from an electronic data logging system and user data, and for synchronizing the electronic flight record with a remote database upon a network storage device accessed via a global communications network; and
the electronic data logging system comprising a plurality of sensors to collect flight data in real-time, wherein the plurality of sensors are selected from the group comprising a global positioning system, barometric pressure, accelerometer, gyroscope, temperature, and magnetometer.

In accordance with an embodiment of the invention there is provided a system for monitoring an asset comprising;
providing a self-contained electronic data logging system comprising a plurality of sensors to collect asset data in real-time and a wireless interface operating to a first predetermined wireless standard, wherein the plurality of sensors are selected from the group comprising a global positioning system, barometric pressure, accelerometer, gyroscope, temperature, and magnetometer;
computer readable instructions stored within a memory of an electronic device, the computer instructions for execution by a microprocessor of the electronic device for generating an electronic record comprising at least data obtained from the self-contained data logging system and for synchronizing the electronic record with a remote database upon a network storage device accessed via a global communications network; wherein
the asset relates to at least one of a temporary, semi-permanent, and permanent installation.

In accordance with an embodiment of the invention there is provided a system for training student pilots for help a student pilot or general aviation pilot learn to become a better aviator by providing a digital record of training and flight sessions recorded, the system comprising two components; one of software run on device such as a PED / FED; and two, an electronic system that contains sensors to collect flight data in real-time, wherein the sensors are selected from the group comprising a global positioning system, barometric pressure, accelerometer, gyroscope, temperature, and magnetometer.

In accordance with an embodiment of the invention there is provided a system for training student pilots that allows a student pilot to learn to fly better and faster with a system that provides feedback on student pilot flight activities.

In accordance with an embodiment of the invention there is provided a system for training student pilots which pilot / flight instructors can also use to share flight training information to a student pilot to focus future in-flight training sessions. As a result, training time will be reduced to qualify a pilot and a digital record of all flight sessions will be recorded as proof of pilot skills.

In accordance with an embodiment of the invention there is provided a system for training student pilots that student pilots can use this technology once they are licensed pilots to record all flight sessions to provide long term digital record of all flight sessions.

In accordance with an embodiment of the invention there is provided a system with data collection features can also be used to collect telemetry data for situations where a digital record of a user's travel is required, wherein the travel is in motorized and / or non-motorized transportation.

In accordance with an embodiment of the invention there is provided a system for training student pilots exploiting software on a mobile device either a mobile phone or tablet can used to track all data sessions recorded and display this data both the student and instructor in a easy to read format.

In accordance with an embodiment of the invention there is provided a system for training student pilots that can be used for detailing the accuracy of aerial application of agriculture sprays, pesticides and other materials, wherein this would include showing precise detail to areas of the fields that were covered and pattern flown for the application aircraft.

In accordance with an embodiment of the invention there is provided a system for providing race or event management systems wherein the sensors can be deployed and used to track progress, rate of travel, identify issues with event registrant(s), and provide accuracy to the race finishing / route / time etc. This would be valuable in industries such boat and yacht racing where other racers can track progress on the course and be able to take advantage of telemetry information to better track wind on the course.

In accordance with an embodiment of the invention there is provided a system for providing the trucking industry with a means to validate a truck driver's claims of travel time, speed, route, inactivity, mandatory breaks etc. that are required by the industry.

In accordance with an embodiment of the invention there is provided a system for providing monitoring of temporary, semi-permanent, and permanent installations wherein the system allows tracking of assets.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 depicts a network environment within which embodiments of the invention may be employed;
Figure 2 depicts a wireless portable electronic device supporting communications to a network such as depicted in Figure 1 and as supporting embodiments of the invention;
Figures 3A and 3B depict wireless portable electronic devices supporting communications to a network such as depicted in Figure 1 and as supporting embodiments of the invention;
Figure 4 depicts an exemplary data flow according to an embodiment of the invention;
Figure 5 depicts exemplary presentations of acquired data in 2D and 3D environments according to an embodiment of the invention;
Figure 6 depicts exemplary presentations of acquired data to a user within different simulator environments according to an embodiment of the invention.

### DETAILED DESCRIPTION

The present invention is directed to training, qualification, and verification systems and more particularly to a system for aiding initial training and qualification whilst supporting ongoing re-qualification and verification.

The ensuing description provides exemplary embodiment(s) only, and is not intended to limit the scope, applicability or configuration of the disclosure. Rather, the ensuing description of the exemplary embodiment(s) will provide those skilled in the art with an enabling description for implementing an exemplary embodiment. It being understood that various changes may be made in the function and arrangement of elements without departing from the spirit and scope as set forth in the appended claims.

A "portable electronic device" (PED) as used herein and throughout this disclosure, refers to a wireless device used for communications and other applications that requires a battery or other independent form of energy for power. This includes devices, but is not limited to, such as a cellular telephone, smartphone, personal digital assistant (PDA), portable computer, pager, portable multimedia player, portable gaming console, laptop computer, tablet computer, and an electronic reader.

A "fixed electronic device" (FED) as used herein and throughout this disclosure, refers to a wireless and /or wired device used for communications and other applications that requires connection to a fixed interface to obtain power. This includes, but is not limited to, a laptop computer, a personal computer, a computer server, a kiosk, a gaming console, a digital set-top box, an analog set-top box, an Internet enabled appliance, an Internet enabled television, and a multimedia player.

A "data logger" (also datalogger or data recorder) as used herein and throughout this disclosure, refers to an electronic device that records data over time or in relation to location either with a built in instrument or sensor or via external instruments and sensors. This includes, but is not limited to, small, battery powered, portable, devices equipped with a microprocessor, internal memory for data storage, and sensors.

An "application" (commonly referred to as an "app") as used herein may refer to, but is not limited to, a "software application", an element of a "software suite", a computer program designed to allow an individual to perform an activity, a computer program designed to allow an electronic device to perform an activity, and a computer program designed to communicate with local and / or remote electronic devices. Generally, within the following description with respect to embodiments of the invention an application is generally presented in respect of software permanently and / or temporarily installed upon a PED and / or FED.

A "social network" or "social networking service" as used herein may refer to, but is not limited to, a platform to build social networks or social relations among people who may, for example, share interests, activities, backgrounds, or real-life connections. This includes, but is not limited to, social networks such as U.S. based services such as Facebook, Google+, Tumblr and Twitter; as well as Nexopia, Badoo, Bebo, VKontakte, Delphi, Hi5, Hyves, iWiW, Nasza-Klasa, Soup, Glocals, Skyrock, The Sphere, StudiVZ, Tagged, Tuenti, XING, Orkut, Mxit, Cyworld, Mixi, renren, weibo and Wretch.

"Social media" or "social media services" as used herein may refer to, but is not limited to, a means of interaction among people in which they create, share, and/or exchange information and ideas in virtual communities and networks. This includes, but is not limited to, social media services relating to magazines, Internet forums, weblogs, social blogs, microblogging, wikis, social networks, podcasts, photographs or pictures, video, rating and social bookmarking as well as those exploiting blogging, picture-sharing, video logs, wall-posting, music-sharing, crowdsourcing and voice over IP, to name a few. Social media services may be classified, for example, as collaborative projects (for example, Wikipedia); blogs and microblogs (for example, Twitter™); content communities (for example, YouTube and DailyMotion); social networking sites (for example, Facebook™); virtual game-worlds (e.g., World of Warcraft™); and virtual social worlds (e.g. Second Life™).

An "enterprise" as used herein may refer to, but is not limited to, a provider of a service and / or a product to a user, customer, or consumer. This includes, but is not limited to, a retail outlet, a store, a market, an online marketplace, a manufacturer, an online retailer, a charity, a utility, and a service provider. Such enterprises may be directly owned and controlled by a company or may be owned and operated by a franchisee under the direction and management of a franchiser.

A "service provider" as used herein may refer to, but is not limited to, a third party provider of a service and / or a product to an enterprise and / or individual and / or group of individuals and / or a device comprising a microprocessor. This includes, but is not limited to, a retail outlet, a store, a market, an online marketplace, a manufacturer, an online retailer, a utility, an own brand provider, and a service provider wherein the service and / or product is at least one of marketed, sold, offered, and distributed by the enterprise solely or in addition to the service provider.

A 'third party' or "third party provider" as used herein may refer to, but is not limited to, a so-called "arm's length" provider of a service and / or a product to an enterprise and / or individual and / or group of individuals and / or a device comprising a microprocessor wherein the consumer and / or customer engages the third party but the actual service and / or product that they are interested in and / or purchase and / or receive is provided through an enterprise and / or service provider.

A "user" as used herein may refer to, but is not limited to, an individual or group of individuals whose activity data may be, but not limited to, monitored, acquired, stored, transmitted, processed and analysed either locally or remotely to the user wherein by their engagement with a service provider, third party provider, enterprise, social network, social media etc. via a dashboard, web service, website, software plug-in, software application, graphical user interface acquires, for example, electronic content. This includes, but is not limited to, private individuals, employees of organizations and / or enterprises, members of community organizations, members of charity organizations, men, women, children, and teenagers. In its broadest sense the user may further include, but not be limited to, mechanical systems, robotic systems, android systems, etc. that may be characterised by being able to autonomous motion.

"Electronic content" (also referred to as "content" or "digital content") as used herein may refer to, but is not limited to, any type of content that exists in the form of digital data as stored, transmitted, received and / or converted wherein one or more of these steps may be analog although generally these steps will be digital. Forms of digital content include, but are not limited to, information that is digitally acquired, digitally generated, digitally broadcast, streamed or contained in discrete files. Viewed narrowly, types of digital content include popular media types such as ANS, CSV, DOTX, TIFF, AAC, TXT, RTF, HTML, XHTML, PDF, PDAX, XLS, TXT, SDF, SIGIF, ODx, TAB, for example, as well as others, see for example http://en.wikipedia.org/wiki/List_of_file_formats. Within a broader approach digital content mat include any type of digital information, e.g. digitally updated weather forecast, a GPS map, an eBook, a social media posting, multimedia content, audiovisual content, etc.

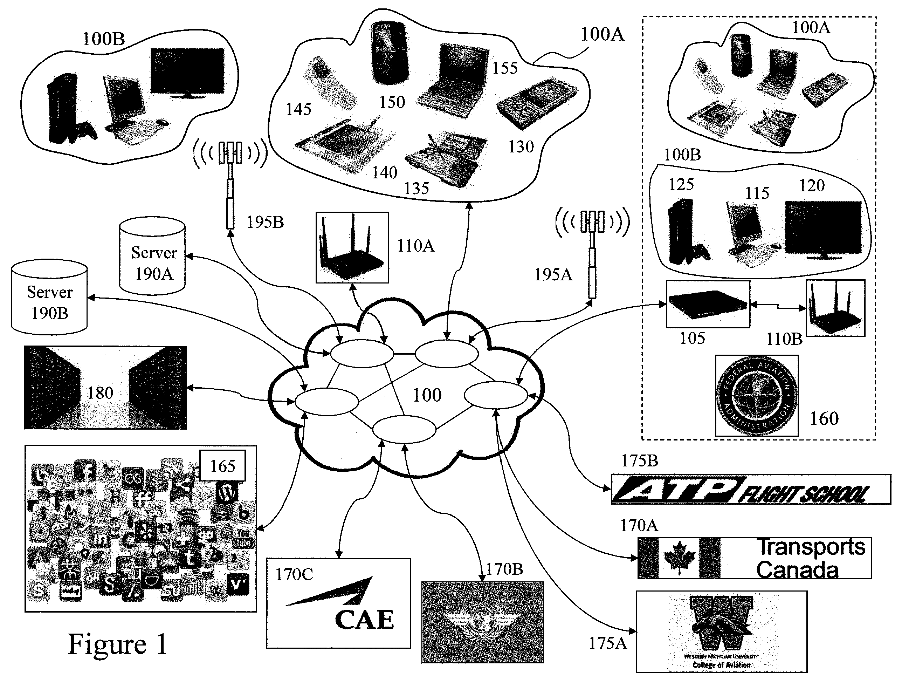

Referring to Figure 1 there is depicted a network environment 100 within which embodiments of the invention may be employed supporting publishing systems and publishing applications / platforms (DL-DLAPs) according to embodiments of the invention. Such DL-DLAPs, for example supporting multiple channels and dynamic content. As shown first and second user groups 100A and 100B respectively interface to a telecommunications network 100. Within the representative telecommunication architecture a remote central exchange 180 communicates with the remainder of a telecommunication service providers network via the network 100 which may include for example long-haul OC-48 / OC-192 backbone elements, an OC-48 wide area network (WAN), a Passive Optical Network, and a Wireless Link. The central exchange 180 is connected via the network 100 to local, regional, and international exchanges (not shown for clarity) and therein through network 100 to first and second cellular APs 195A and 195B respectively which provide Wi-Fi cells for first and second user groups 100A and 100B respectively. Also connected to the network 100 are first and second Wi-Fi nodes 110A and 110B, the latter of which being coupled to network 100 via router 105. Second Wi-Fi node 110B is associated with Enterprise 160, e.g. United States Federal Aviation Administration (FAA), within which other first and second user groups 100A and 100B are present. Second user group 100B may also be connected to the network 100 via wired interfaces including, but not limited to, DSL, Dial-Up, DOCSIS, Ethernet, AFDX, G.hn, ISDN, MoCA, PON, and Power line communication (PLC) which may or may not be routed through a router such as router 105.

Within the cell associated with first AP 110A the first group of users 100A may employ a variety of PEDs including for example, laptop computer 155, portable gaming console 135, tablet computer 140, smartphone 150, cellular telephone 145 as well as portable multimedia player 130. Within the cell associated with second AP 110B are the second group of users 100B which may employ a variety of FEDs including for example gaming console 125, personal computer 115 and wireless / Internet enabled television 120 as well as cable modem 105. First and second cellular APs 195A and 195B respectively provide, for example, cellular GSM (Global System for Mobile Communications) telephony services as well as 3G and 4G evolved services with enhanced data transport support. Second cellular AP 195B provides coverage in the exemplary embodiment to first and second user groups 100A and 100B. Alternatively the first and second user groups 100A and 100B may be geographically disparate and access the network 100 through multiple APs, not shown for clarity, distributed geographically by the network operator or operators. First cellular AP 195A as show provides coverage to first user group 100A and environment 170, which comprises second user group 100B as well as first user group 100A. Accordingly, the first and second user groups 100A and 100B may according to their particular communications interfaces communicate to the network 100 through one or more wireless communications standards such as, for example, IEEE 802.11, IEEE 802.15, IEEE 802.16, IEEE 802.20, UMTS, GSM 850, GSM 900, GSM 1800, GSM 1900, GPRS, ITU-R 5.138, ITU-R 5.150, ITU-R 5.280, and IMT-1000. It would be evident to one skilled in the art that many portable and fixed electronic devices may support multiple wireless protocols simultaneously, such that for example a user may employ GSM services such as telephony and SMS and Wi-Fi / WiMAX data transmission, VOIP and Internet access. Accordingly portable electronic devices within first user group 100A may form associations either through standards such as IEEE 802.15 and Bluetooth as well in an ad-hoc manner.

Also connected to the network 100 are Social Networks (SOCNETS) 165, first and second regulatory bodies 170A and 170B respectively, e.g. Transport Canada and International Civil Aviation Organization, simulator provider 170C, e.g. CAE™, and first to second training providers 175A and 175B respectively, e.g. Western Michigan University College of Aviation and ATP Flight School, as well as first and second servers 190A and 190B which together with others, not shown for clarity. First and second servers 190A and 190B may host according to embodiments of the inventions multiple services associated with a provider of data loggers and data logging applications / platforms (DL-DLAPs); a provider of a SOCNET or Social Media (SOME) exploiting DL-DLAP features; a provider of a SOCNET and / or SOME not exploiting DL-DLAP features; a provider of services to PEDS and / or FEDS; a provider of one or more aspects of wired and / or wireless communications; an Enterprise 160 exploiting DL-DLAP features; license databases; content databases; image databases; content libraries; customer databases; websites; and software applications for download to or access by FEDs and / or PEDs exploiting and / or hosting DL-DLAP features. First and second primary content servers 190A and 190B may also host for example other Internet services such as a search engine, financial services, third party applications and other Internet based services.

Accordingly, a consumer and / or customer (CONCUS) may exploit a PED and / or FED within an Enterprise 160, for example, and access one of the first or second primary content servers 190A and 190B respectively to perform an operation such as accessing / downloading an application which provides DL-DLAP features according to embodiments of the invention; execute an application already installed providing DL-DLAP features; execute a web based application providing DL-DLAP features; or access content. Similarly, a CONCUS may undertake such actions or others exploiting embodiments of the invention exploiting a PED or FED within first and second user groups 100A and 100B respectively via one of first and second cellular APs 195A and 195B respectively and first Wi-Fi nodes 110A.

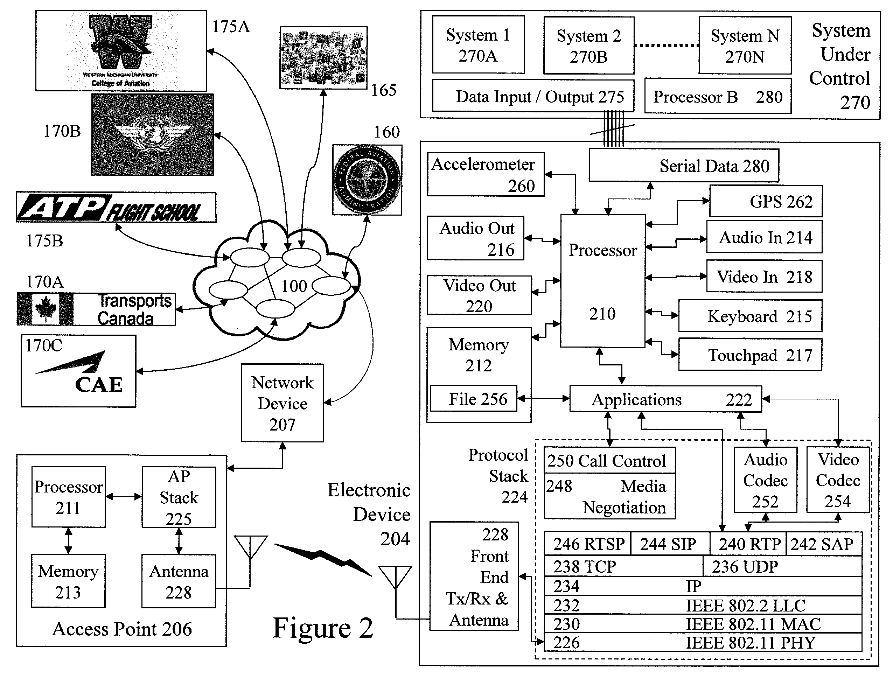

Now referring to Figure 2 there is depicted an electronic device 204 and network access point 207 supporting DL-DLAP features according to embodiments of the invention. Electronic device 204 may, for example, be a PED and / or FED and may include additional elements above and beyond those described and depicted. Also depicted within the electronic device 204 is the protocol architecture as part of a simplified functional diagram of a system 200 that includes an electronic device 204, such as a smartphone 155, an access point (AP) 206, such as first AP 110, and one or more network devices 207, such as communication servers, streaming media servers, and routers for example such as first and second servers 190A and 190B respectively. Network devices 207 may be coupled to AP 206 via any combination of networks, wired, wireless and/or optical communication links such as discussed above in respect of Figure 1 as well as directly as indicated. Network devices 207 are coupled to network 100 and therein Social Networks (SOCNETS) 165, first and second regulatory bodies 170A and 170B respectively, e.g. Transport Canada and International Civil Aviation Organization, simulator provider 170C, e.g. CAE™, and first to second training providers 175A and 175B respectively, e.g. Western Michigan University College of Aviation and ATP Flight School, as well as first and second servers 190A and 190B which together with others, not shown for clarity.

The electronic device 204 includes one or more processors 210 and a memory 212 coupled to processor(s) 210. AP 206 also includes one or more processors 211 and a memory 213 coupled to processor(s) 210. A non-exhaustive list of examples for any of processors 210 and 211 includes a central processing unit (CPU), a digital signal processor (DSP), a reduced instruction set computer (RISC), a complex instruction set computer (CISC) and the like. Furthermore, any of processors 210 and 211 may be part of application specific integrated circuits (ASICs) or may be a part of application specific standard products (ASSPs). A non-exhaustive list of examples for memories 212 and 213 includes any combination of the following semiconductor devices such as registers, latches, ROM, EEPROM, flash memory devices, non-volatile random access memory devices (NVRAM), SDRAM, DRAM, double data rate (DDR) memory devices, SRAM, universal serial bus (USB) removable memory, and the like.

Electronic device 204 may include an audio input element 214, for example a microphone, and an audio output element 216, for example, a speaker, coupled to any of processors 210. Electronic device 204 may include a video input element 218, for example, a video camera or camera, and a video output element 220, for example an LCD display, coupled to any of processors 210. Electronic device 204 also includes a keyboard 215 and touchpad 217 which may for example be a physical keyboard and touchpad allowing the user to enter content or select functions within one of more applications 222. Alternatively the keyboard 215 and touchpad 217 may be predetermined regions of a touch sensitive element forming part of the display within the electronic device 204. The one or more applications 222 that are typically stored in memory 212 and are executable by any combination of processors 210. Electronic device 204 also includes accelerometer 260 providing three-dimensional motion input to the process 210 and GPS 262 which provide geographical location information to processor 210 whilst Serial Data 280 represents a serial data port for input / output communications. Typically, Serial Data 280 will be coupled to a connector for physical connectivity of electronic device 204 to another electronic system wherein the connector and serial data protocol are typically of a single serial communications standard. Examples of serial communications standards include, but are not limited, to RS-232, RS-422, I2C, Universal Serial Bus, Firewire and Ethernet. Optionally, electronic device 204 may include a parallel communications interface, not shown, operating according to a parallel communications standard via a parallel connector. Examples of parallel communications standards include, but are not limited, to IEEE-488, IEEE-1284, HIPPI, SCSI, Fibre Channel, and PC-Card (PCMCIA).

Electronic device 204 includes a protocol stack 224 and AP 206 includes a communication stack 225. Within system 200 protocol stack 224 is shown as IEEE 802.11 protocol stack but alternatively may exploit other protocol stacks such as an Internet Engineering Task Force (IETF) multimedia protocol stack for example. Likewise AP stack 225 exploits a protocol stack but is not expanded for clarity. Elements of protocol stack 224 and AP stack 225 may be implemented in any combination of software, firmware and/or hardware. Protocol stack 224 includes an IEEE 802.11-compatible PHY module 226 that is coupled to one or more Front-End Tx/Rx & Antenna 228, an IEEE 802.11-compatible MAC module 230 coupled to an IEEE 802.2-compatible LLC module 232. Protocol stack 224 includes a network layer IP module 234, a transport layer User Datagram Protocol (UDP) module 236 and a transport layer Transmission Control Protocol (TCP) module 238.

Protocol stack 224 also includes a session layer Real Time Transport Protocol (RTP) module 240, a Session Announcement Protocol (SAP) module 242, a Session Initiation Protocol (SIP) module 244 and a Real Time Streaming Protocol (RTSP) module 246. Protocol stack 224 includes a presentation layer media negotiation module 248, a call control module 250, one or more audio codecs 252 and one or more video codecs 254. Applications 222 may be able to create maintain and/or terminate communication sessions with any of devices 207 by way of AP 206. Typically, applications 222 may activate any of the SAP, SIP, RTSP, media negotiation and call control modules for that purpose. Typically, information may propagate from the SAP, SIP, RTSP, media negotiation and call control modules to PHY module 226 through TCP module 238, IP module 234, LLC module 232 and MAC module 230.

Electronic device 204 is also interfaced to System under Control (SUC) 270 which comprises a plurality of systems, System 1 to System N 270A - 270N respectively, which are coupled to Processor B 280. Processor B 280 may be an overall controller of SUC 270 or a secondary processor providing acquisition of system data which is provided to Data Input / Output 275. For example, within an aviation setting this data may include, but not be limited, pressure, calculated altitude, airspeed, vertical acceleration, magnetic heading, time, control column position, rudder pedal position, stabilizer setting, and fuel flow. Within an automotive setting this data may include, speed, accelerator position, break position, gear engaged, and turning indicator status. Data Input / Output 275, as depicted is coupled directly to Serial Data 280 although in other embodiments of the invention Data Input / Output 275 may be coupled to Serial Data 280 via a protocol converter. For example, Data Input / Output 275 may exploit a parallel communications standard, e.g. IEEE-1284, whilst Serial Data 280 exploits serial data, e.g. USB.

It would be apparent to one skilled in the art that elements of the electronic device 204 may also be implemented within the AP 206 including but not limited to one or more elements of the protocol stack 224, including for example an IEEE 802.11-compatible PHY module, an IEEE 802.11-compatible MAC module, and an IEEE 802.2-compatible LLC module 232. The AP 206 may additionally include a network layer IP module, a transport layer User Datagram Protocol (UDP) module and a transport layer Transmission Control Protocol (TCP) module as well as a session layer Real Time Transport Protocol (RTP) module, a Session Announcement Protocol (SAP) module, a Session Initiation Protocol (SIP) module and a Real Time Streaming Protocol (RTSP) module, media negotiation module, and a call control module. Portable and fixed electronic devices represented by electronic device 204 may include one or more additional wireless or wired interfaces in addition to or in replacement of the depicted IEEE 802.11 interface which may be selected from the group comprising IEEE 802.15, IEEE 802.16, IEEE 802.20, UMTS, GSM 850, GSM 900, GSM 1800, GSM 1900, GPRS, ITU-R 5.138, ITU-R 5.150, ITU-R 5.280, IMT-1000, DSL, Dial-Up, Avionics Full Duplex Switched Ethernet (AFDX) DOCSIS, Ethernet, G.hn, ISDN, MoCA, PON, and Power line communication (PLC).

Accordingly, data relating to SUC 270 may be coupled initially to electronic device 204 during an activity relating to a user associated with the electronic device 204. Subsequently, the data stored within the data logger 300 may be transferred to one of the first and second servers 190A and 190B respectively (not shown for clarity) via access point 206, network device 207, and network 100. Once stored within the remote storage it may be analysed, characterised, and reported either to the user or to one or more third parties including, for example, SOCNETS 165, first and second regulatory bodies 170A and 170B respectively, e.g. Transport Canada and International Civil Aviation Organization, simulator provider 170C, e.g. CAE™, and first to second training providers 175A and 175B respectively, e.g. Western Michigan University College of Aviation and ATP Flight School.

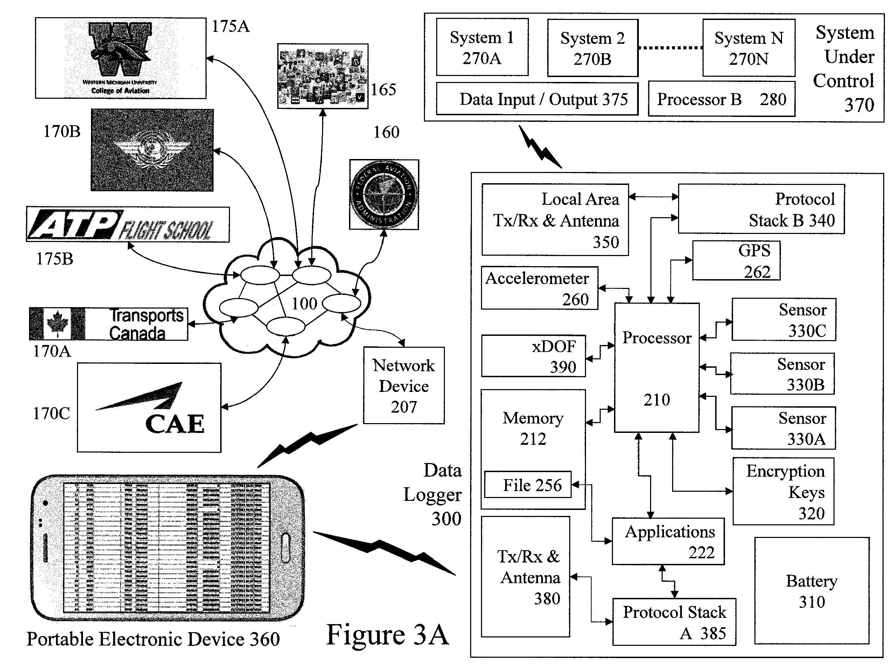

Now referring to Figure 3A there is depicted a data logger 300 and network access point 207 supporting DL-DLAP features according to embodiments of the invention which are interfaced via Portable Electronic Device (PED) 360. Data logger 300 as depicted comprises one or more processors 210 and a memory 212 coupled to processor(s) 210, where the memory 212 includes one or more files 256 which are accessed by one or more applications 222. The processor(s) 210 also communicate with discrete memory 320 containing encryption keys in order to encrypt communications to / from the data logger 300 such as those to PED 360. Also interfaced to the processor(s) 210 are GPS 262, accelerometer 260, first to third sensors 330A to 330C respectively, and N-Degree of Freedom (xDOF) sensor 390. xDOF sensor 390 may include, for example, an R-axis accelerometer, an S-axis magnetometer, and T-axis gyroscope. R, S, and T are integers having values 0, 1, 2, and 3 according to the design of the data logger 300 and the capabilities of the accelerometer 260 for example. For example, R=S=T=3 to yield a 9DOF sensor for xDOF sensor 390. The data logger 300 interfaces with PED 360 via a wireless protocol controlled by an application 222 via protocol stack A 385 and Tx/Rx & Antenna 380. Similarly, data logger 300 interfaces with System under Control (SUC) 370 via a wireless protocol controlled by an application 222 via protocol stack A 385 and Tx/Rx & Antenna 380. First to third sensors 330A to 330C respectively may include, but not be limited to, those for temperature, barometric pressure, absolute pressure, humidity, audible sound, and vision.

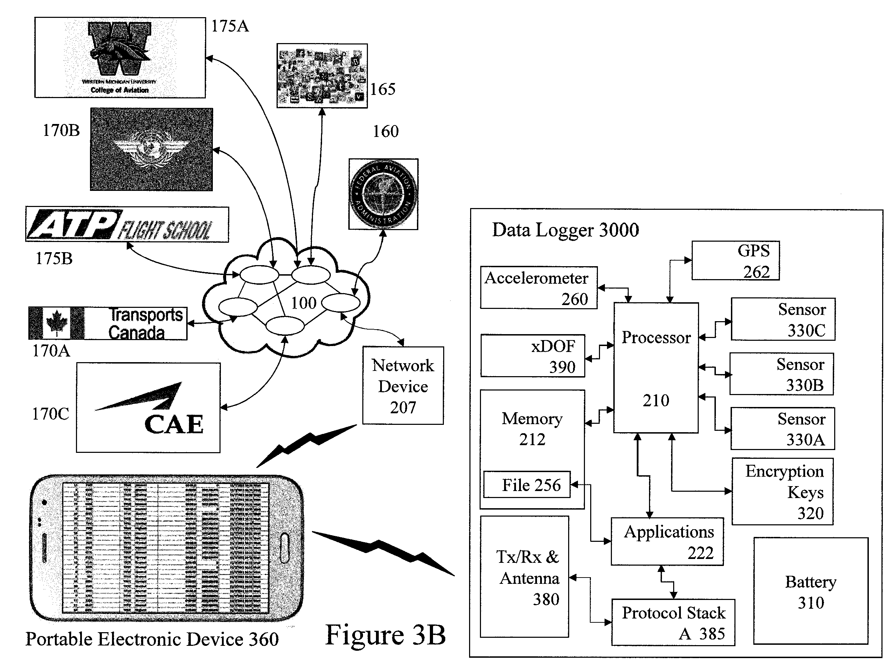

Data logger 300 is also interfaced to SUC 370 which comprises a plurality of systems, System 1 to System N 270A - 270N respectively, which are coupled to Processor B 280. Processor B 280 may be an overall controller of SUC 270 or a secondary processor providing acquisition of system data which is provided to Data Input / Output 375. Data Input / Output 375, as depicted is coupled to Local Area Tx/Rx & Antenna 350 within data logger 300 which provides data to processor(s) 210 via protocol stack B 340. Optionally, Tx/Rx & Antenna 380 and its associated protocol stack A 385 are the same functional elements as Local Area Tx/Rx & Antenna 350 and protocol stack B 340 or these are different functional elements operating to a different communications standard, although both may be short-range wireless communication protocols as depicted in Figure 3. Examples of such short-range communications protocols include, but are not limited to, IEEE 802.15.1 (Bluetooth), IEEE 802.15.3 (ultra-wideband, UWB), IEEE 802.15.4 (Zigbee), and IEEE 802.11 (WiFi).

Accordingly, data relating to SUC 370 may be coupled initially to data logger 300 during an activity relating to a user associated with the data logger 300 where it is encrypted using one or more encryption keys stored within discrete memory 320. Subsequently, the data stored within the data logger 300 may be transferred to PED 360 for access by the user wherein it may also be pushed to remote storage, such as upon first and second servers 190A and 190B respectively (not shown for clarity) wherein it may be analysed, characterised, and reported either to the user or to one or more third parties including, for example, SOCNETS 165, first and second regulatory bodies 170A and 170B respectively, e.g. Transport Canada and International Civil Aviation Organization, simulator provider 170C, e.g. CAE™, and first to second training providers 175A and 175B respectively, e.g. Western Michigan University College of Aviation and ATP Flight School, as well as first and second servers 190A and 190B which together with others, not shown for clarity.

Now referring to Figure 3B there is depicted a data logger 3000 according to an embodiment of the invention. Data logger 3000 is essentially functionally equivalent to data logger 300 in Figure 3A without the Local Area Tx/Rx & Antenna 350 and Protocol Stack B 340. Accordingly, whilst data logger 300 in Figure 3A interfaces to the SUC 370, which is under control of the user, data logger 3000 in Figure 3B does not and is accordingly a self-contained data logger for the generation of data rather than the acquisition and generation of data. Similarly, with respect to Figure 2, the electronic device 204 may or may not be in communication with the SUC 270 according to embodiments of the invention. In some embodiments of the invention according to the SUC 270 / 370 the data loggers 300 / 3000 may or may not be interfaced to the SUC 270 / 370.

Optionally, electronic device 204 and data loggers 300 / 3000 may communicate the data stored within memory 212 via a wired interface or optical interface as an alternative to a wireless interface. Optionally, data loggers 300 / 3000 may include wireless interfaces supporting direct communication an access point 206 and / or network device 207 by a standard selected from the group comprising IEEE 802.15, IEEE 802.16, IEEE 802.20, UMTS, GSM 850, GSM 900, GSM 1800, GSM 1900, GPRS, ITU-R 5.138, ITU-R 5.150, and ITU-R 5.280 for example as well as wired interfaces such as AFDX, Ethernet, etc.

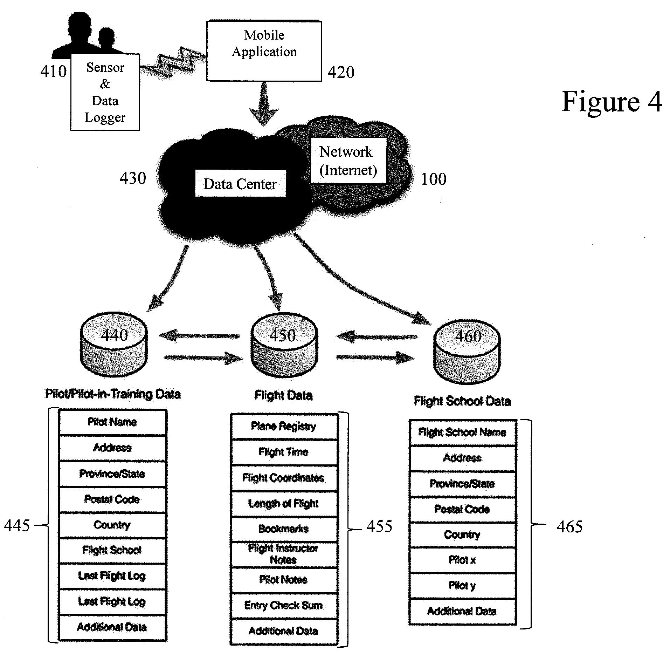

Within the embodiments of the invention described supra in respect of Figures 1 to 3B and below in respect of Figures 4 to 5 the user is a pilot and their training, qualification, re-qualification, verification, certification, etc. are described with respect to flying. Accordingly, from this viewpoint these Figures 1 to 5 illustrate a method to collect flight data and present it visually to be viewed after the flight. This data can use to provide a detailed analysis to flight techniques with one or more goals including, but not limited to:
- making a pilot more effective;
- allowing a trainee to compare their actual to that anticipated / required;
- archive flights taken by the pilot as proof of flight hours in support of a flight log;
- provide an automatically generated flight log; and
- provide verifiable flight log data for certification / re-certification.

However, embodiments of the invention may also provide data to be used in respect of other modes of travel including automobiles, transport trucks, yachts, boats, or just walking where a digital record is required for the travel taken.

Referring to Figure 4 there is depicted an exemplary data flow according to an embodiment of the invention wherein data from a DL-DLAP 410 is initially provided to an intermediate mobile application 420, e.g. an application in execution upon a PED / FED of the user. The raw and / or processed data from the mobile application 420 is pushed to a data center 430 via a network 100 wherein it is stored within first to third servers 440 to 470 respectively. Within first server 440 is a pilot / pilot in-training database (P-PIT-DB) 445 storing data including, but not limited to, pilot name, pilot's address, flight school, last flight log(s) and additional data. Within second server 450 flight data database (FD-DB) 455 is stored cross-indexed to P-PIT-DB 445. As such FD-DB 455 stores data including, but not limited to, plane registry, flight time, flight coordinates, length of flight, bookmarks, flight instructor notes, pilot notes, entry checksum, and additional data. Within third server 465 is stored flight school data is stored within flight school database (FS-DB) which is cross-indexed with P-PIT-DB 445 and FD-DB 455. FS-DB stores data, including, but not limited to, flight school name, address, pilots trained, and additional data.

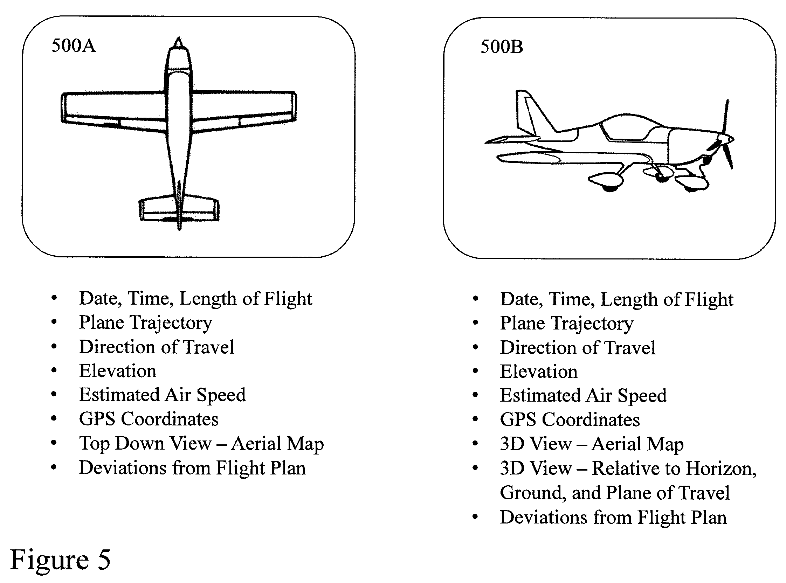

Now referring to Figure 5 there are depicted first and second rendering modes 500A and 500B for data acquired by a DL-DLAP according to an embodiment of the invention wherein the user, e.g. trainee pilot, or a third party, e.g. flight instructor, retrieves and views a flight. In first rendering mode 500 A the data is rendered within a two-dimensional (2D) graphical environment / user interface, wherein the data available to the viewer may include, but not be limited to:
- Date, Time, Length of Flight
- Plane Trajectory
- Direction of Travel
- Elevation
- Estimated Air Speed
- GPS Coordinates
- Top Down View - Aerial Map
- Deviations from Flight Plan

n first rendering mode 500 A the data is rendered within a two-dimensional (2D) graphical environment / user interface, wherein the data available to the viewer may include, but not be limited to:
- Date, Time, Length of Flight
- Plane Trajectory
- Direction of Travel
- Elevation
- Estimated Air Speed
- GPS Coordinates
- 3D View - Aerial Map
- 3D View - Relative to Horizon, Ground, and Plane of Travel
- Deviations from Flight Plan

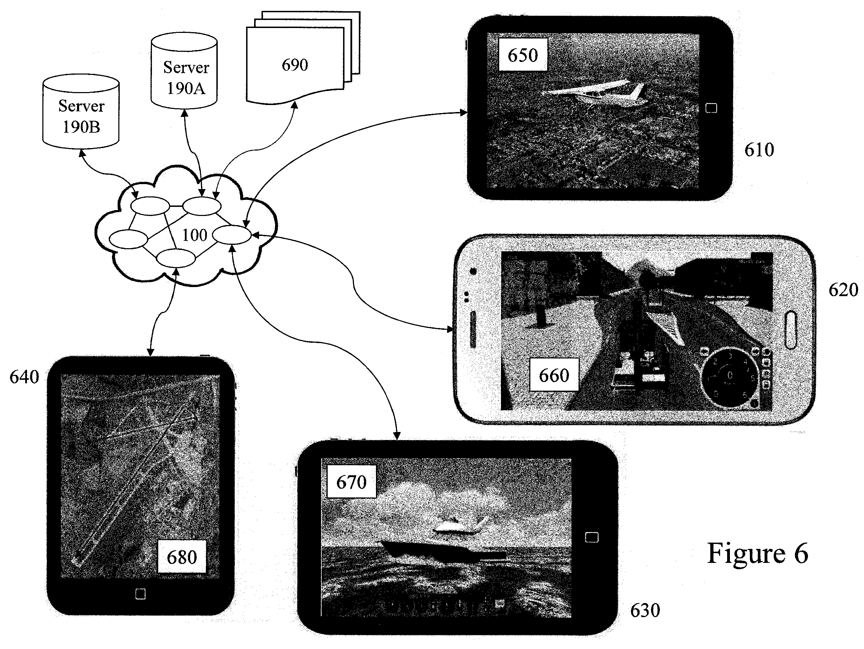

Now referring to Figure 6 there are depicted first to fourth simulation renderings 650 to 680 on first to fourth devices 610 to 640 respectively. In each instance the user has selected an event wherein data acquired by a DL-DLAP in respect of the event has been remotely stored e.g. upon first and second servers 190A and 190B respectively. The data for this event is retrieved by an application in execution upon the user's PED / FED, e.g. first to fourth devices 610 to 640 respectively, and provided to a converter application 690 wherein it is converted from the stored format to a data file format compatible with one or more simulator programs which allow the user's simulator actions to be stored and replayed. Accordingly, simulators for first to fourth simulation renderings 650 to 680 respectively would be a flight simulator in first and fourth simulation renderings, driving simulator in second simulation rendering 660, and a marine simulator in third simulation rendering 670. In this manner the user may view their event in a simulated manner allowing them to review, analyse, criticize, learn, etc.

*Flight Data Collection:* A DL-DLAP, such as electronic device 204, data logger 300, and data logger 3000, either discretely or in combination with a SUC 270 / 370 being controlled by a user, collects data relating to different aspects of a flight including, but not limited, data selected from the group comprising GPS coordinates, elevation relative to sea level, direction of travel, speed of travel, rotation relative to plane of direction traveled, pressure, humidity, and temperature. With the goal of recording the user's journey from one point to another, e.g. a flight training session, then the DL-DLAP allows the trainee pilot to collect their flight data from these pilot training sessions for subsequent review and analysis.

For example, using different sensors as inputs the data collection may be focused on relative x, y, and z coordinates for the flight. These may, for example, include barometric pressure to determine altitude, GPS to determine location, and gyroscope to determine variations in roll, pitch, and yaw. Wireless interfaces allow the DL-DLAP to communicate with a PED 360 and / or AP 206, network device 207 allowing the data to be stored within a remote storage device, e.g. a server such as first and second servers 190A and 190B.

According to embodiments of the invention the data may be stored discretely for subsequent retrieval or it may be stored with bookmarks, indicators, etc. added by the trainee pilot and / or the flight instructor. These may, for example, be added during a post-flight review between the trainee pilot and flight instructor or be added separately. Optionally, a supervisor of the flight instructor may access the stored data in addition to other third parties in order to assess the flight instructor.

*Flight Logs:* As the data collected through DL-DLAP is archived on a remote system(s), e.g. first and second servers 190A and 190B respectively, as well as on the user's PED 360 it can be used to validate claims of flight hours traveled and also skill level of the pilot. Data logged is cryptographically stored within the DL-DLAP (electronic device 204, data logger 300, and data logger 3000) as well as PED 360 and remote storage in order that signs of file tampering may be identified. Optionally, according to an embodiment of the invention, the cryptographic keys for encrypting the data may be provided by a third party, e.g. first and second regulatory bodies 170A and 170B respectively. Optionally, the data may be stored in a first location for access by the user, a trainer / instructor, first to second training providers 175A and 175B respectively, etc. as well as third parties such as simulator provider 170C, and cryptographically stored in a second location for access by a regulatory authority, e.g. first and second regulatory bodies 170A and 170B respectively.

*Other Industries:* Besides aviation the DL-DLAP can record data for a SUC 270 / 370 such as a vehicle, a coach, a bus, a train, a boat, a ship, a yacht, a snowmobile, a truck, a bicycle, sailboard, micro-light, glider, parachute, a motorbike, etc. regardless of whether it is motorized. Similarly, the DL-DLAP can record data for human powered and other applications including, skiing, snowboarding, surfing, running, jogging, walking, etc. where the goal is to record and keep a permanent record of the travel taken between two points. Optionally, systems may be associated with multiple users within a coordinated environment, e.g. a race, allowing other users to view a user's progress / record in the event. Optionally, a race may be run over an extended period as each user's participation is logged securely and cryptographically when performed so that, for example, a 10km run may be set to occur between 8am and 5pm wherein a runner may depart at any time between these or be required to start and finish within these limits. Other activities such as orienteering may be similarly tracked and managed.

Optionally, within group events and / or single user activities summary data from the activity may be pushed from the remote storage and / or user's PED to a profile within a SOCNET and / or SOME either associated with the user, the instructor, the training provider, etc.

*Data Rendering:* The data collected can be used to develop and display visual content to the user, such as depicted in Figure 6 or described elsewhere within this specification. This may, for example, be leveraged for training purposes for the user or verifying completion of an activity. For example, a crop spraying aircraft can be tracked and data logged indicating not only its flight paths but also the times when the spray was active. Data is initially stored within the DL-DLAP but may either at a predetermined time or upon association of the DL-DLAP with the user's PED, access point, network device etc. transfer the data to mobile computing platform and a network based storage system accessible via secure data connection such as transportation via HTTPS, SSL or TLS, for example.

*Operation of an Embodiment:* With the ability to capture and collect multiple data points including relative X, Y, and Z coordinates to the horizon, global positioning data, barometric pressure, and G-force in a single self-contained mobile device the data logger can provide in-depth information to a student pilot. This will include the ability for a flight instructor during flight time to bookmark flight activities for a student to playback and review after the inflight session. This data will be duplicated to a network storage service where it will reside to act as validation to flight training and abilities of the student pilot. Flight schools can use this technology to track progress of student pilots and licensed pilots can used to improve flight skills and electronically validate flight hours claimed in a hand written flight log.

All flight data is collected, validated and stored using security checksums to further ensure it has not been tampered with once stored. If a sensor unit is tampered with the variance in data can be reported to both the student pilot, the instructor and/or flight school to who the device is registered or alternatively it may be escalated to a regulatory authority, for example. Over a period of time, students can show how they have progressed and ensure that claims to acquisition of flight skills, flight time etc. can be demonstrated. This becomes particularly relevant when used for flight testing and check flights. This will provide the necessary proof that a pilot has completed the necessary training for the claims being made. In the event of inflight incident the data recorded can be used to analyse the event to determine possible cause and remediation actions for subsequent flights.

Besides flight applications this technology and the associated network data collection service can provide applications in the following use cases:

*Race Management Systems -* DL-DLAPs according to embodiments of the invention may track racers in an event on water, land and air to precise location, speed of travel, and relative position to other racers. During these event it can be used to identify problems with a registered racer and provide subsequent support services. Optionally, it can be used to provide strategy data to racers to determine best course of action during the race. This includes boat racing and cross country motorized vehicles racing etc. Smaller units can be used for instances of personal tracking for either running, cycling, skiing, walking events, etc.

*Aerial Application -* DL-DLAPs according to embodiments of the invention may provide detailed feedback to when applications are completed and precise pattern flowed by an aircraft at flight time. This can be used a proof of job completion and quality of work being provided to property owners.

*Security:* DL-DLAPs according to embodiments of the invention may be employed to track and monitor high priced assets such as aircraft, vehicles and boats. If an asset was to become lost or stolen the sensor unit can be used for tracking last known position. This includes foreclosure situations for asset owners to reclaim their assets. In such instances, the provisioning of DL-DLAPs with long-range wireless protocols such as GSM and / or WiFi protocols rather than short-range wireless protocols, such as Bluetooth for example, may be beneficial.

*Driver Compliance:* In a similar method to pilot log book validation a DL-DLAP according to an embodiment of the invention may be employed within the trucking industry to validate claims of time spent at rest / inactivity versus driving by a truck driver during long haul events. Violations to these events can be reported to the trucking company dispatch and/or operator for follow-up and validation to the reported violations although in other embodiments of the invention notifications to regulatory authorities such as transportation authorities, police, etc. may be undertaken.

*Fire Fighting and Natural Disasters:* In many instances a forest fire requires aerial firefighting support. Discretely, or in combination with an air-to-air network aircraft engaged in combatting a forest fire can be provided detailed flight paths for targeted water and fire retardant drops based upon previous flight paths and / or tracking of a lead plane. Data provided to the pilot can then include the precise path and drop point based on wind, altitude, fire data, and previous drop(s). Similarly, in other natural disasters dropping supplies, materials, etc. may be improved through accurate knowledge of previous routes.

*Geofencing:* Embodiments of the invention may alert a user or others associated with the user when they have left a predetermined region, i.e. they have crossed a geographically defined non-physical fence (geofence). This may be beneficial with the elderly and / or children - adults with medical conditions where they do not remember their current residence and might quickly become lost. This unit would alert family members or care givers audible and electronic notification to precise location of the person being tracked. Additional sensors such as heart rate and body temperature would ensure the device can detect the unit is still on a live person or if it has been discarded.

Accordingly, embodiments of the invention provide a system for training student pilots for help a student pilot or general aviation pilot learn to become a better aviator by providing a digital record of training and flight sessions recorded. This system compromises of two components; one of software run on device such as a PED / FED; and two, an electronic system that contains sensors to collect flight data in real-time. These sensors can include, but not be limited to, a global positioning system, barometric pressure, accelerometer, gyroscope, temperature, and magnetometer.

Accordingly, embodiments of the invention provide a system for training student pilots that allows a student pilot to learn to fly better and faster with a system the provides feedback on student pilot flight activities.

Accordingly, embodiments of the invention provide a system for training student pilots which pilot / flight instructors can also use to share flight training information to a student pilot to focus future in-flight training sessions. As a result, training time will be reduced to qualify a pilot and a digital record of all flight sessions will be recorded as proof of pilot skills.

Accordingly, embodiments of the invention provide a system for training student pilots student pilots can use this technology once they are licensed pilots to record all flight sessions to provide long term digital record of all flight sessions.

Accordingly, embodiments of the invention provide a system with data collection features can also be used to collect telemetry data for situations where a digital record of a user's travel is required. This can be travel in motorized and / or non-motorized transportation.

Accordingly, embodiments of the invention provide a system for training student pilots exploiting software on a mobile device either a mobile phone or tablet can used to track all data sessions recorded and display this data both the student and instructor in a easy to read format.

Accordingly, embodiments of the invention provide a system for training student pilots that can be used for detailing the accuracy of aerial application of agriculture sprays, pesticides and other materials. This would include showing precise detail to areas of the fields that were covered and pattern flown for the application aircraft. The field owners can obtain reports in real time relating the spray provided for their planted fields. This should also assist with issues of over spraying and can provide more accuracy to apply sprays only in needed areas plus allow field owners to verify spraying without being physically present.

Accordingly, embodiments of the invention provide a system for providing race or event management systems wherein the sensors can be deployed and used to track progress, rate of travel, identify issues with event registrant(s), and provide accuracy to the race finishing / route / time etc. This would be valuable in industries such boat and yacht racing where other racers can track progress on the course and be able to take advantage of telemetry information to better track wind on the course.

Accordingly, embodiments of the invention provide a system for providing the trucking industry with a means to validate a truck driver's claims of travel time, speed, route, inactivity, mandatory breaks etc. that are required by the industry. If a truck has been traveling for more than the required hours, alerts can be sent to the trucking company dispatch/operator to investigate further.

Accordingly, embodiments of the invention provide a system for providing monitoring of temporary, semi-permanent, and permanent installations wherein the system allows tracking of assets.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above and/or a combination thereof.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages and/or any combination thereof. When implemented in software, firmware, middleware, scripting language and/or microcode, the program code or code segments to perform the necessary tasks may be stored in a machine readable medium, such as a storage medium. A code segment or machine-executable instruction may represent a procedure, a function, a subprogram, a program, a routine, a subroutine, a module, a software package, a script, a class, or any combination of instructions, data structures and/or program statements. A code segment may be coupled to another code segment or a hardware circuit by passing and/or receiving information, data, arguments, parameters and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor and may vary in implementation where the memory is employed in storing software codes for subsequent execution to that when the memory is employed in executing the software codes. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels and/or various other mediums capable of storing, containing or carrying instruction(s) and/or data.

The methodologies described herein are, in one or more embodiments, performable by a machine which includes one or more processors that accept code segments containing instructions. For any of the methods described herein, when the instructions are executed by the machine, the machine performs the method. Any machine capable of executing a set of instructions (sequential or otherwise) that specify actions to be taken by that machine are included. Thus, a typical machine may be exemplified by a typical processing system that includes one or more processors. Each processor may include one or more of a CPU, a graphics-processing unit, and a programmable DSP unit. The processing system further may include a memory subsystem including main RAM and/or a static RAM, and/or ROM. A bus subsystem may be included for communicating between the components. If the processing system requires a display, such a display may be included, e.g., a liquid crystal display (LCD). If manual data entry is required, the processing system also includes an input device such as one or more of an alphanumeric input unit such as a keyboard, a pointing control device such as a mouse, and so forth.

The memory includes machine-readable code segments (e.g. software or software code) including instructions for performing, when executed by the processing system, one of more of the methods described herein. The software may reside entirely in the memory, or may also reside, completely or at least partially, within the RAM and/or within the processor during execution thereof by the computer system. Thus, the memory and the processor also constitute a system comprising machine-readable code.

In alternative embodiments, the machine operates as a standalone device or may be connected, e.g., networked to other machines, in a networked deployment, the machine may operate in the capacity of a server or a client machine in server-client network environment, or as a peer machine in a peer-to-peer or distributed network environment. The machine may be, for example, a computer, a server, a cluster of servers, a cluster of computers, a web appliance, a distributed computing environment, a cloud computing environment, or any machine capable of executing a set of instructions (sequential or otherwise) that specify actions to be taken by that machine. The term "machine" may also be taken to include any collection of machines that individually or jointly execute a set (or multiple sets) of instructions to perform any one or more of the methodologies discussed herein.

The foregoing disclosure of the exemplary embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

## Claims

1. A system for training a pilot by providing a digital record of training and flight sessions, the system comprising:
computer readable instructions stored within a memory of an electronic device associated with the pilot, the computer instructions for execution by a microprocessor of the electronic device generating an electronic flight record comprising at least data obtained from an electronic data logging system and user data, and for synchronizing the electronic flight record with a remote database upon a network storage device accessed via a global communications network; and
the electronic data logging system comprising a plurality of sensors to collect flight data in real-time, wherein the plurality of sensors are selected from the group comprising a global positioning system, barometric pressure, accelerometer, gyroscope, temperature, and magnetometer.

2. The system according to claim 1, wherein
at least one of:
the electronic flight record further comprises a flight path generated prior to a flight by the pilot, wherein the at least data obtained from an electronic data logging system and user data relate to the actual flight; and
the remote database is associated with at least one of a regulator authority governing the pilot and a training service providing training to the pilot.

3. The system according to claim 1, further comprising
computer readable instructions stored within a memory of another electronic device, which when executed, provide to the pilot at least one of a:
a simulation allowing the pilot to review a completed flight; and
a simulator allowing the pilot to review a first predetermined portion of a completed flight and virtually execute a second predetermined portion of the completed flight.

4. The system according to claim 1, wherein
at least one of:
the electronic flight record is associated within the database with a flight path generated prior to a flight by the pilot which generates the electronic flight record, wherein the flight path is a predetermined flight path of a plurality of flight paths that form at least one of a training program, a qualification program, a verification program and a re-qualification program; and
the electronic flight records of the pilot stored upon the remote database upon a network storage device are used to at least validate, re-validate, and qualify a pilot's license against a predetermined set of criteria associated with the license.

5. The system according to claim 1, wherein
the electronic data logging system is a self-contained portable module associated with the pilot which is placed within the aircraft by the pilot prior to a flight and removed by the pilot after a flight.

6. A system for providing a digital record of an activity relating to a controller of a vehicle, the system comprising:
computer readable instructions stored within a memory of an electronic device associated with the controller, the computer instructions for execution by a microprocessor of the electronic device generating an electronic travel record comprising at least data obtained from an electronic data logging system and user data, and for synchronizing the electronic travel record with a remote database upon a network storage device accessed via a global communications network; and
the electronic data logging system comprising a plurality of sensors to collect travel data in real-time, wherein the plurality of sensors are selected from the group comprising a global positioning system, barometric pressure, accelerometer, gyroscope, temperature, and magnetometer.

7. The system according to claim 6, wherein
at least one of:
the electronic travel record further comprises a travel path generated prior to a travel event by the controller, wherein the at least data obtained from an electronic data logging system and user data relate to the actual travel; and
the remote database is associated with at least one of a regulator authority governing the controller, a training service providing training to the controller, and an employer of the controller.

8. The system according to claim 6, further comprising
computer readable instructions stored within a memory of another electronic device, which when executed, provide to the controller at least one of a:
a simulation allowing the controller to review a completed travel; and
a simulator allowing the controller to review a first predetermined portion of a completed travel and virtually execute a second predetermined portion of the completed travel.

9. The system according to claim 6, wherein
the electronic travel record is at least one of:
associated within the database with a travel path generated prior to a travel by the controller which generates the electronic travel record, wherein the travel path is a predetermined travel path of a plurality of travel paths that form at least one of a training program, a qualification program, a verification program and a re-qualification program; and
the electronic travel records of the controller stored upon the remote database upon a network storage device are used to at least validate, re-validate, and qualify a license associated with the controller against a predetermined set of criteria associated with the license.

10. The system according to claim 6, wherein
the electronic data logging system is a self-contained portable module associated with the controller which is placed within the vehicle by the controller prior to travelling and removed by the controller after travelling.

11. The system according to claim 6, wherein
the electronic travel record is associated within the database with a travel path generated prior to a travel by the controller which generates the electronic travel record, wherein the travel path is a predetermined travel path of a plurality of travel paths that relate to the aerial application of at least one of an agricultural spray and a pesticide to a predetermined area of land; and
the system provides the owner of the predetermined area of land with a visualization of the aerial application with respect to the predetermined area of land.

12. The system according to claim 11, wherein
the system determines a fee relating to the aerial application based upon at least the predetermined area of land and the electronic data record.

13. The system according to claim 6, wherein
the electronic data logging system is provided to the controller by an organizer of an event; and
the remote database is associated with a race or event management systems such that electronic data logging systems are provided to all event registrants allowing for at least one of tracking progress, identifying issues, providing verification of event registrant route compliance, and race timing data.

14. The system according to claim 6, wherein
the controller is a driver of a vehicle subject to regulatory oversight; and
the electronic data record provides a means to validate at least one of the driver's compliance with regulatory requirements and the driver's timesheet data.

15. A system for monitoring an asset comprising;
providing a self-contained electronic data logging system comprising a plurality of sensors to collect asset data in real-time and a wireless interface operating to a first predetermined wireless standard, wherein the plurality of sensors are selected from the group comprising a global positioning system, barometric pressure, accelerometer, gyroscope, temperature, and magnetometer;
computer readable instructions stored within a memory of an electronic device, the computer instructions for execution by a microprocessor of the electronic device for generating an electronic record comprising at least data obtained from the self-contained data logging system and for synchronizing the electronic record with a remote database upon a network storage device accessed via a global communications network; wherein
the asset relates to at least one of a temporary, semi-permanent, and permanent installation.
